# FASCICULE DE BREVET EUROPEEN

(11) **EP 4 011 203 B1**
(45) Date de publication et mention de la délivrance du brevet: **02.08.2023**
(21) Numéro de dépôt: 21214277.2
(22) Date de dépôt: 14.12.2021
(51) Int. Cl.: A01M 1/02, A01M 1/10, A01M 1/04

(54) **DISPOSITIF DE PIÉGEAGE D'INSECTES, NOTAMMENT D'INSECTES VOLANTS ET UTILISATION D'UN TEL DISPOSITIF**
VORRICHTUNG ZUM FANGEN VON INSEKTEN, INSBESONDERE VON FLUGINSEKTEN, UND VERWENDUNG EINER SOLCHEN VORRICHTUNG
TRAPPING DEVICE FOR INSECTS, IN PARTICULAR FLYING INSECTS, AND USE OF SUCH A DEVICE

(30) Priorité: 14.12.2020 FR 2013136
(43) Date de publication de la demande: 15.06.2022
(73) Titulaire: Melchior Material And Life Science France, 64170 LACQ (FR)
(72) Inventeur: GUERRET, Olivier, 46170 PERN (FR)
(74) Mandataire: Regimbeau

(56) Documents cités:
- EP-A1- 2 883 452
- FR-A1- 3 035 774
- FR-A1- 3 061 832
- FR-A3- 3 036 582

## Description

### DOMAINE TECHNIQUE GENERAL

La présente invention se situe dans le domaine général du piégeage d'insectes. Elle concerne plus particulièrement un dispositif de piégeage d'insectes, notamment d'insectes volants, qui consiste en un réceptacle de piégeage.

### ETAT DE LA TECHNIQUE

On connaît dans l'art antérieur des compositions attractives pour insectes à base de sémiochimiques, comme les phéromones sexuelles, par exemple pour lutter contre certaines espèces d'insectes ravageurs (pyrale du buis, processionnaire du pin et du chêne, mineuse du marronnier, zeuzère du poirier, noctuelle américaine du maïs, etc.). Pour d'autres types d'insectes comme les frelons ou les guêpes, les attractants sont généralement des cocktails d'attractants alimentaires ou des substances favorisant l'agrégation de ces insectes. Généralement, le but du piégeage est de réduire significativement la population des insectes visés soit pour protéger les végétaux soit pour protéger d'autres insectes comme les abeilles.

Pour ce faire, lesdites compositions attractives sont placées dans des pièges. On connaît un type de piège généralement désigné sous l'appellation « piège funnel » qui consiste en un réceptacle de piégeage, lequel comprend un bol inférieur de réception desdits insectes, qui est surmonté d'un chapeau supérieur formant d'une part un piège et d'autre part un couvercle pour le bol, ledit bol inférieur et ledit chapeau supérieur étant conformés pour être assemblés de manière amovible, ledit chapeau comportant un orifice qui se prolonge vers le bas en direction dudit bol inférieur pour former un couloir convergent en forme d'entonnoir.

Ainsi, les insectes sont attirés à l'intérieur du piège et rentrent dans le bol inférieur, via le couloir convergent en forme d'entonnoir. Une fois dans le bol, les insectes ne peuvent que très difficilement en sortir, en raison de la forme particulière du couloir convergent.

Dans la plupart des cas, on cible une espèce particulière d'insectes, par exemple la pyrale du buis. Toutefois, il est fréquent que d'autres insectes non ciblés, par exemple de plus petite taille, soient également piégés, ce qui n'est évidemment pas le but recherché.

Une solution pour résoudre ce problème a consisté à prévoir un dispositif de piégeage du type décrit ci-dessus, dont la paroi du bol inférieur est pourvue d'un ensemble d'ouvertures identiques, mais dont les dimensions sont telles que seuls des insectes de taille inférieure à celle des insectes ciblés peuvent s'échapper. La limite d'un tel piège est que cela ne convient qu'à un type d'insectes dont la taille est inférieure à celle des ouvertures.

On connaît également une variante du dispositif décrit ci-dessus, dans lequel lesdites ouvertures ont la forme de petits conduits parallèles dont une extrémité est partiellement obturée par une languette sécable. On comprend que tant que la baguette sécable est encore en place, le passage des insectes est conditionné aux dimensions du passage non obturé par la baguette. En revanche, lorsque la baguette est sectionnée, l'intégralité de la section du passage est disponible pour des insectes de taille supérieure. Bien entendu, après sectionnement de la baguette, on ne peut plus revenir à la taille inférieure de passage.

On connaît aussi un piège du type évoqué plus haut, dont le bol présente une large découpe qui peut être partiellement obturée par une grille amovible. On met à disposition un jeu de grilles dont les mailles présentent des ouvertures de tailles différentes, de manière à pouvoir cibler tel ou tel type d'insecte. La mise en place et l'enlèvement exige une certaine dextérité.

Le document FR3061832 décrit un piège selon le préambule de la revendication 1 annexée. Ce piège renferme un panier grillagé non mobile en rotation dont le fond comporte une ouverture centrale.

Des insectes de petite taille peuvent s'échapper du piège uniquement par une sortie rectangulaire formée dans le panier pour autant qu'elle soit en regard d'une ouverture rectangulaire du bol constituant le piège, prévue de forme identique, tandis que les frelons, trop gros pour franchir cette sortie, sont naturellement dirigés vers le fond du piège, par l'ouverture centrale dont il a été fait mention plus haut.

La présente invention a pour but de pallier les défauts des dispositifs de l'art antérieur présentés ci-dessus en proposant un dispositif de piégeage d'insectes qui consiste en un réceptacle de piégeage, qui puisse être utilisé au choix comme un piège « funnel » classique ou comme un piège permettant de permettre l'échappement d'au moins deux tailles d'insectes, et ce de manière réversible.

### PRESENTATION DE L'INVENTION

Ainsi, la présente invention a pour objet un dispositif de piégeage d'insectes, notamment d'insectes volants, qui consiste en un réceptacle de piégeage, lequel comprend un bol inférieur de réception desdits insectes, qui est surmonté d'un chapeau supérieur formant d'une part un piège et d'autre part un couvercle pour le bol, ledit bol inférieur et ledit chapeau supérieur étant conformés pour être assemblés de manière amovible, ledit chapeau comportant un orifice qui se prolonge vers le bas en direction dudit bol inférieur pour former un couloir convergent en forme d'entonnoir, ledit bol comportant dans une région de sa paroi périphérique une première ouverture présentant une première surface, ce bol étant pourvu d'un organe mobile présentant au moins une seconde ouverture et au moins une troisième ouverture, ou inversement, ces seconde et troisième ouvertures présentant des surfaces différentes et inférieures à celle de ladite première ouverture, caractérisé par le fait que la paroi périphérique dudit bol est généralement cylindrique et que ledit organe mobile a la forme d'une bague montée mobile en rotation autour de ladite paroi périphérique, contre la face extérieure de cette paroi, ledit organe étant mobile entre une première position dans laquelle ni ladite seconde ni ladite troisième ouverture ne sont positionnées en regard de ladite première ouverture, et des positions supplémentaires dans lesquelles ladite au moins une seconde ouverture ou ladite au moins une troisième ouverture est positionnée en regard de ladite première ouverture.

Grâce à ces caractéristiques, on peut faire un usage multiple et réversible du dispositif. En effet, lorsque ledit organe est dans la première position, aucun passage n'est disponible pour les insectes, de sorte que le dispositif s'apparente à un piège funnel classique de grand volume. En revanche, quand l'organe mobile occupe l'une ou l'autre des positions supplémentaires dans lesquelles ladite au moins une seconde ouverture ou ladite au moins une troisième ouverture est positionnée en regard de ladite première ouverture, alors on peut sélectionner le type d'insectes que l'on souhaite voir s'échapper du dispositif.

De plus, s'agissant d'un organe mobile, le passage d'une position à l'autre est particulièrement simple et à la portée d'un néophyte.

Par l'expression « ou inversement », on entend dans l'ensemble de la présente demande que le bol peut être pourvu desdites au moins une seconde ouverture et au moins une troisième ouverture, tandis que l'organe mobile est pourvu de ladite une première ouverture.

Selon d'autres caractéristiques avantageuses et non limitatives de l'invention, prises seules ou selon une combinaison quelconque compatible techniquement :
- le nombre de secondes et de troisièmes ouvertures est supérieur à deux ;
- une réhausse est intercalée entre ledit bol et ledit chapeau et ladite bague est montée mobile en rotation autour de cette réhausse ;
- l'orifice dudit chapeau est surmonté d'un disque, ce disque étant positionné à distance dudit orifice de sorte à laisser un passage pour lesdits insectes vers ledit orifice.

Par ailleurs, la présente invention se rapporte à l'utilisation d'un tel dispositif pour la protection d'une culture, d'un jardin potager ou d'ornement, d'une parcelle agricole, ou d'un lieu où sont implantées des ruches, vis-à-vis d'insectes ravageurs.

### DESCRIPTION DES FIGURES

D'autres caractéristiques et avantages de l'invention apparaîtront au cours de la description qui va maintenant en être faite, en référence aux dessins annexés, qui en représentent, à titre indicatif mais non limitatif, différents modes de réalisation possibles.

Sur ces dessins :
La figure 1 est une vue éclatée de face d'un mode de réalisation du dispositif selon l'invention ;
La figure 2 est une vue similaire à la figure 1, le dispositif étant représenté en perspective ;
La figure 3 est une vue de face du dispositif des figures précédentes, les différentes pièces qui le constituent étant assemblées ;
La figure 4 est une vue analogue à la figure 3, le dispositif étant représenté en perspective ;
La figure 5 est une vue partielle de face du dispositif des figures précédentes, l'organe mobile qui l'équipe étant représenté dans une première position permettant la fuite d'une première catégorie d'insectes ;
La figure 6 est une vue partielle de face du dispositif des figures précédentes, l'organe mobile qui l'équipe étant représenté dans une deuxième position permettant la fuite d'une deuxième catégorie d'insectes ;
La figure 7 est une vue partielle de face du dispositif des figures précédentes, l'organe mobile qui l'équipe étant représenté dans une deuxième position permettant la fuite d'une deuxième catégorie d'insectes.

### DESCRIPTION DETAILLEE DE L'INVENTION

Le piège représenté sur les figures annexées est préférentiellement en matière plastique. A titre purement indicatif, cette matière plastique peut consister en du polypropylène, du polystyrène et de manière plus générale un thermoplastique éventuellement biosourcé et/ou biodégradable.

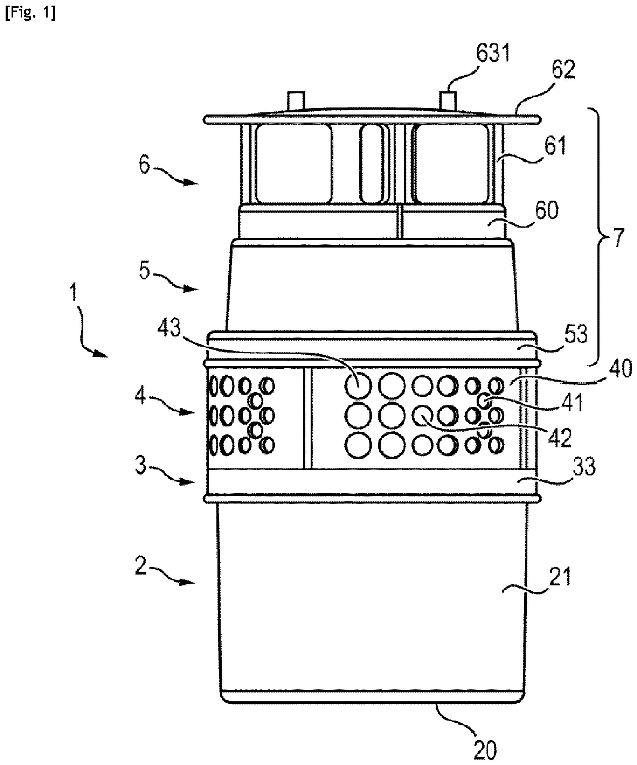

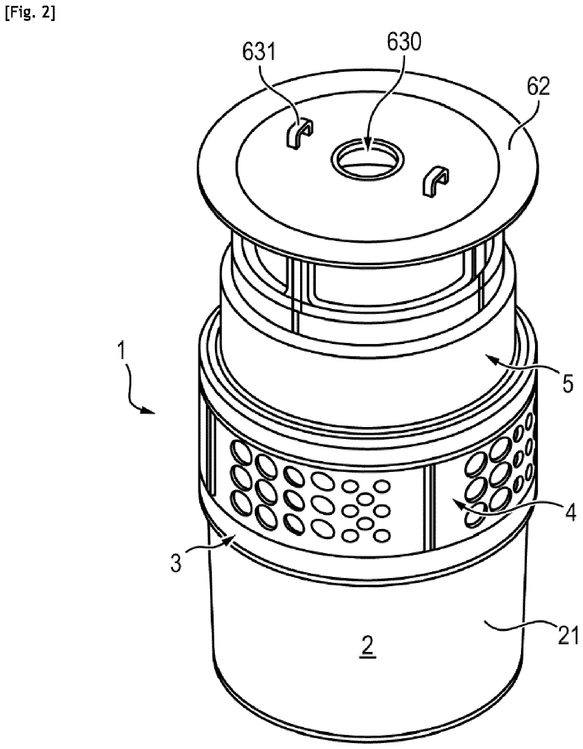

Ainsi que cela est visible notamment aux figures 1 à 4, le mode de réalisation du piège 1 illustré ici comprend essentiellement un bol inférieur 2, une réhausse 3 pourvue d'un organe mobile 4 en forme de bague et d'un chapeau supérieur 7.

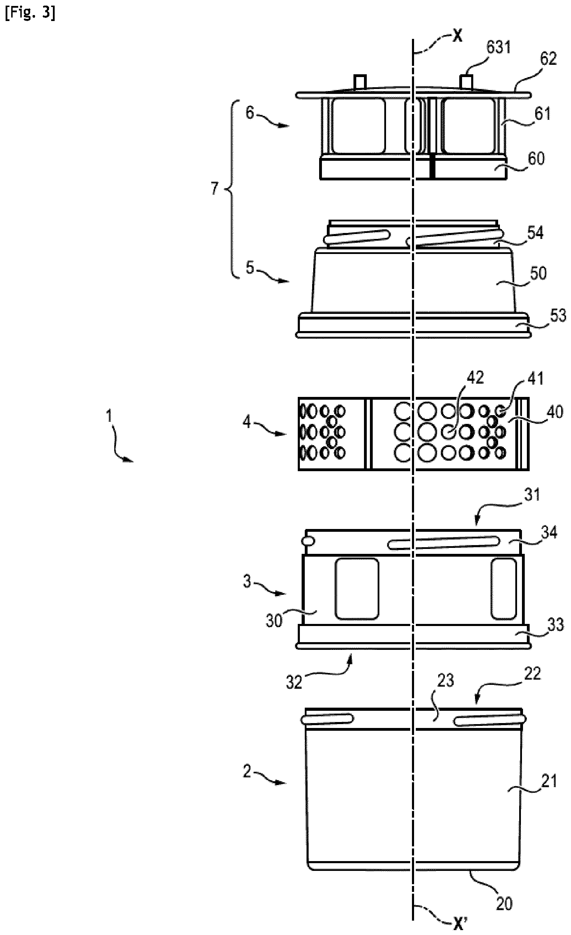

Chacune de ces pièces a une forme de révolution et elles sont toutes centrées sur un axe X-X' visible à la figure 3.

Le bol inférieur 2 est destiné à réceptionner les insectes piégés. Il comporte un fond 20 avantageusement plan et circulaire, à la périphérie duquel s'élève une paroi cylindrique 21. Cette dernière délimite une large ouverture 22 dans sa partie supérieure qui forme un orifice d'accès. A proximité immédiate de l'ouverture 22, la paroi 21 comporte, sur sa face externe, des nervures 23 formant filets de vissage.

La réhausse 3 constitue en quelque sorte un prolongement du bol 2 vers le haut.

Cette réhausse 3 est une pièce généralement cylindrique. Ses ouvertures supérieure et inférieure sont référencées 31 et 32. Une collerette 33 borde l'ouverture inférieure 32. La face intérieure de cette collerette 33 est pourvue de nervures 330 formant filets de vissage. Ces nervures sont positionnées de manière complémentaire aux nervures 23 du bol 2, de manière à pouvoir coopérer mutuellement par vissage sur un quart de tour, ainsi que cela est connu en soi.

De manière analogue, la paroi 30 comporte, au voisinage de l'ouverture supérieure 31, des nervures 34 formant filets de vissage.

Entre ces nervures 34 et la collerette 33, la paroi 30 présente quatre ouvertures 35, qualifiées de « premières ouvertures ». Elles sont équidistantes angulairement. Dans un mode de réalisation, le nombre d'ouvertures peut être inférieur à quatre. Il peut être supérieur à quatre, à condition de ne pas fragiliser la structure de la réhausse. Ces ouvertures ont ici une forme généralement rectangulaire, dont les grands côtés s'étendent parallèlement à l'axe X-X'.

Les ouvertures 35 sont identiques et présentent une première surface prédéterminée.

Comme précisé plus haut, la réhausse 3 pourvue d'un organe mobile 4 en forme de bague.

Cette bague 4 a une hauteur et un diamètre compatible avec ceux de la réhausse 3, de manière à pouvoir coopérer avec elles en se positionnant contre la face extérieure de la paroi 30. Autrement dit, cette bague est disposée à l'extérieur, autour du piège, de manière à pouvoir être directement accessible afin de l'animer d'un mouvement de rotation.

Elle est montée en force sur la réhausse 3 au moment du passage des nervures 34, puis est retenue par la collerette 33.

La paroi 40 de la bague est pourvue de quatre groupes d'ouvertures 41, 42 et 43. Le nombre de groupes est ici égal au nombre d'ouvertures 35. Il pourrait toutefois être différent.

Les ouvertures 41 sont au nombre de huit, tandis que les ouvertures 42 et 43 sont au nombre de six. Ces nombres pourraient être différents.

Il s'agit d'ouvertures circulaires dont le rayon est progressif, les plus petites étant les ouvertures 41. En tout état de cause, chaque ouverture 41 à 43 occupe individuellement une surface inférieure à celle des ouvertures 35.

Par ailleurs, chaque groupe d'ouvertures 41 à 43 s'inscrit dans une surface globale qui est inférieure à la surface de chacune des ouvertures 35. En d'autres termes et ainsi qu'on le verra plus loin, quand la bague 4 est actionnée en rotation autour de l'axe X-X', la totalité des ouvertures 41, 42 ou 43 d'un groupe peut être mise en regard d'une ouverture 35.

On notera que selon un mode de réalisation non illustré ici, ladite réhausse 3 pourrait être absente. Dans cette hypothèse, les ouvertures 35 précitées seraient formées directement dans la paroi 21 du bol 2. Par ailleurs, l'organe mobile 4 coopérerait directement avec le bol 2.

Le dispositif 1 comporte également un chapeau 7, qui est ici formé de deux parties 5 et 6 qui coopèrent entre elles. Dans un mode de réalisation différent et non illustré ici, les deux parties 5 et 6 pourrait former une seule et unique pièce.

La partie 5 peut être qualifiée d'embase. Elle présente une paroi cylindrique externe 50 avec une ouverture supérieure 51 et une ouverture inférieure 52. Elle est pourvue à sa base d'une collerette périphérique 53 dont la face interne (non visible) présente des nervures 530 formant filets de vissage, pour sa coopération avec la réhausse 3.

Sa paroi 50 présente en direction de l'ouverture supérieure 51 une diminution de diamètre formant une bague cylindrique 54 pourvue de filets de vissage 540 sur sa face externe.

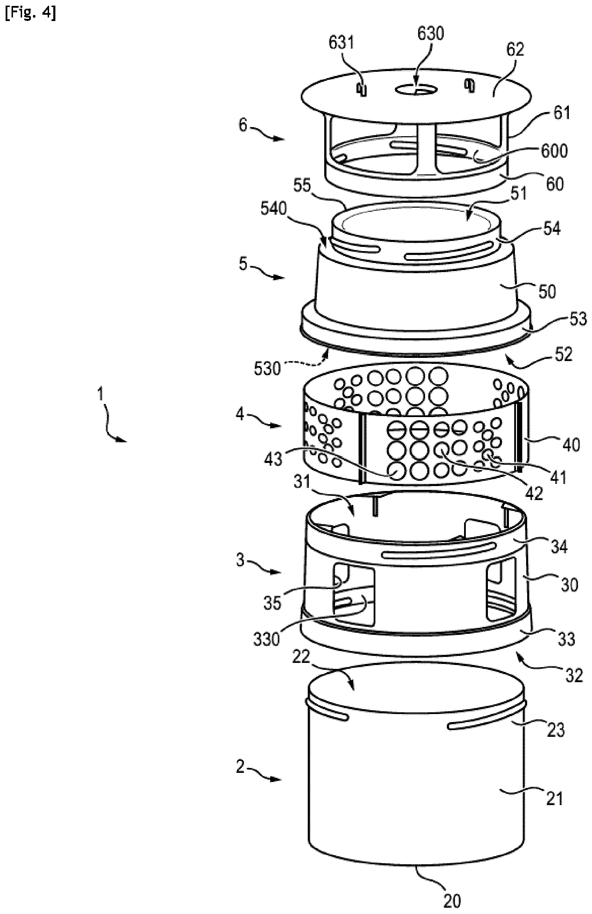

Enfin, la paroi 50 se poursuit, autour de l'ouverture supérieure 51, par une paroi secondaire 55 qui constitue un couloir convergent descendant en forme d'entonnoir 55 (visible seulement partiellement à la figure 4) dont l'ouverture inférieure se situe sensiblement au même niveau que celui de la collerette 53.

La partie 6 forme une couverture pour l'embase 5. Sa base est formée d'une bague cylindrique 60 dont la face interne comporte des nervures 600 formant filets de vissage, pour permettre son assemblage avec ceux 540 de l'embase 5.

Depuis cette bague s'élèvent quatre piliers verticaux et équidistants 61 qui servent de support à un disque 62 qui forme le sommet du piège 1. Ce disque comporte une ouverture centrale 630 dont on expliquera plus loin la fonction. Par ailleurs, on note la présence, sur ce disque, de deux appendices 631 pour la suspension du piège à un support.

Une fois que les différents éléments qui constituent ce dispositif 1 sont assemblées, il est prêt à être utilisé. Toutefois, on aura préalablement pris soin d'y placer une composition attractive pour l'espèce d'insectes à piéger. Cette dose peut être placée par exemple dans un diffuseur dont la forme et les dimensions sont adaptées pour venir se placer dans l'ouverture 630 du disque 6. Cette dose peut, en variante, être positionnée dans le bol 2.

L'utilisation du dispositif selon l'invention se fait de la manière suivante.

Les insectes à piéger sont attirés par la composition précitée. Ils peuvent rentrer dans le dispositif par les larges ouvertures qui séparent deux à deux les piliers 61. Ils sont amenés à se déplacer vers le bas par le couloir convergent en forme d'entonnoir 55 puis pénètrent dans le bol 2, via la réhausse 3. Toute sortie par le chemin inverse est quasiment impossible, en raison de la petite ouverture que délimite l'extrémité inférieure de l'entonnoir 55.

Pour autant que la bague 4 ait été positionnée de telle sorte qu'aucune des ouverture 41 à 43 ne soit placée en regard des ouvertures 35, aucune sortie des insectes n'est possible. Ils sont tous piégés dans le bol 2, y compris ceux qui appartiennent à une espèce non visée.

En revanche dès lors que l'on souhaite que certaines espèces non visées puissent s'échapper et pour autant que ces espèces présentent une taille inférieure à celle de l'espèce ciblée, il suffit de faire subir une rotation partielle de la bague 4, de manière qu'un groupe particulier d'ouvertures 41, 42 ou 43 soit positionné en regard des ouvertures 35 de la réhausse 3.

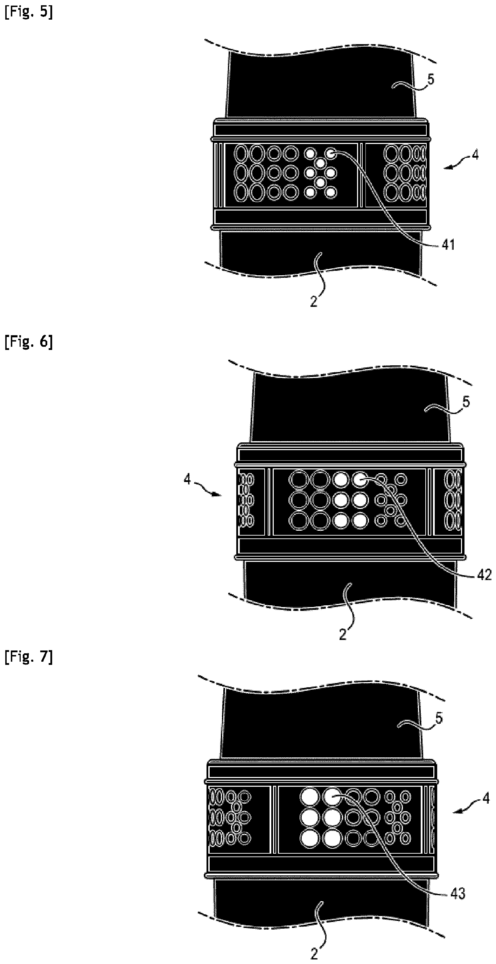

Ce groupe est choisi en fonction de la taille des insectes à libérer, comme le montrent les figures 5 à 7. Sur ces trois figures, on notera que les zones respectivement représentées en noir et en blanc sur les figures précédentes, ont été ici inversées. Cela a simplement pour but de rendre particulièrement visible le groupe particulier d'ouvertures 41, 42 ou 43 qui est situé en regard des ouvertures 35.

Bien entendu, cette utilisation est réversible, dans le sens où on peut choisir de laisser s'échapper tel type d'insectes, puis tel autre.

Dans le mode d'utilisation qui vient d'être décrit, on se rapproche de l'usage d'un piège « funnel » classique.

Il est toutefois possible de l'utiliser en position renversée, c'est-à-dire « tête en bas », à la manière d'un piège « Mc Phail ».

De manière connue en soi, la couleur des différents éléments du dispositif 1 est choisie en fonction de l'attirance de l'espèce à piéger vis-à-vis de cette couleur.

La présente invention se rapporte également à l'utilisation d'un tel dispositif pour la protection d'une culture, d'un jardin potager ou d'ornement, d'une parcelle agricole, ou d'un lieu où sont implantées des ruches, vis-à-vis d'insectes ravageurs.

## Revendications

1. Dispositif (1) de piégeage d'insectes, notamment d'insectes volants, qui consiste en un réceptacle de piégeage, lequel comprend un bol inférieur (2) de réception desdits insectes, qui est surmonté d'un chapeau supérieur (7) formant d'une part un piège et d'autre part un couvercle pour le bol (2), ledit bol inférieur (2) et ledit chapeau supérieur (7) étant conformés pour être assemblés de manière amovible, ledit chapeau (7) comportant un orifice (51) qui se prolonge vers le bas en direction dudit bol inférieur (2) pour former un couloir convergent en forme d'entonnoir (55), ledit bol (2) comportant dans une région de sa paroi périphérique (30) une première ouverture (35) présentant une première surface, ce bol (2) étant pourvu d'un organe mobile (4) présentant au moins une seconde ouverture (41,42,43) et au moins une troisième ouverture (41,42,43), ou inversement, ces seconde et troisième ouvertures (41,42,43) présentant des surfaces différentes et inférieures à celle de ladite première ouverture (35), **caractérisé par le fait que** la paroi périphérique (20) dudit bol (2) est généralement cylindrique et que ledit organe mobile (4) a la forme d'une bague montée mobile en rotation autour de ladite paroi périphérique (30), contre la face extérieure de cette paroi, ledit organe (4) étant mobile entre une première position dans laquelle ni ladite seconde ni ladite troisième ouverture (41,42,43) ne sont positionnées en regard de ladite première ouverture (35), et des positions supplémentaires dans lesquelles ladite au moins une seconde ouverture (41,42,43) ou ladite au moins une troisième ouverture (41,42,43) est positionnée en regard de ladite première ouverture (35).

2. Dispositif (1) de piégeage selon la revendication 1, **caractérisé par le fait que** le nombre de secondes et de troisièmes ouvertures (41,42,43) est supérieur à deux.

3. Dispositif (1) de piégeage selon la revendication 1 ou 2, **caractérisé par le fait qu'**une réhausse (3) est intercalée entre ledit bol (2) et ledit chapeau (7) et que ladite bague (4) est montée mobile en rotation autour de cette réhausse (3).

4. Dispositif (1) de piégeage selon l'une des revendications précédentes, **caractérisé par le fait que** l'orifice (51) dudit chapeau (7) est surmonté d'un disque (62), ce disque (62) étant positionné à distance dudit orifice (51 de sorte à laisser un passage pour lesdits insectes vers ledit orifice (51).

5. Utilisation d'un dispositif (1) selon l'une des revendications 1 à 5 pour la protection d'une culture, d'un jardin potager ou d'ornement, d'une parcelle agricole, ou d'un lieu où sont implantées des ruches, vis-à-vis d'insectes ravageurs.

## Patentansprüche

1. Fangvorrichtung (1) für Insekten, insbesondere Fluginsekten, die aus einem Fangbehälter besteht, der eine untere Schale (2) zum Aufnehmen der Insekten umfasst, auf der sich eine obere Haube (7) befindet, die einerseits eine Falle und andererseits einen Deckel für die Schale (2) bildet, wobei die untere Schale (2) und die obere Haube (7) ausgestaltet sind, um lösbar zusammengebaut zu werden, wobei die Haube (7) eine Öffnung (51) umfasst, die sich nach unten in Richtung der unteren Schale (2) erstreckt, um einen zusammenlaufenden trichterförmigen Durchgang (55) zu bilden, wobei die Schale (2) in einem Bereich ihrer Umfangswand (30) eine erste Öffnung (35) umfasst, die eine erste Oberfläche aufweist, wobei die Schale (2) mit einem beweglichen Element (4) versehen ist, das mindestens eine zweite Öffnung (41, 42, 43) und mindestens eine dritte Öffnung (41, 42, 43) aufweist oder umgekehrt, wobei diese zweiten und dritten Öffnungen (41, 42, 43) unterschiedliche und niedrigere Oberflächen als die der ersten Öffnung (35) aufweisen, **dadurch gekennzeichnet, dass** die Umfangswand (20) der Schale (2) im Allgemeinen zylindrisch ist und dass das bewegliche Element (4) die Form eines Rings hat, der drehbar um die Umfangswand (30) gegen die Außenfläche dieser Wand montiert ist, wobei das Element (4) zwischen einer ersten Position, in der weder die zweite noch die dritte Öffnung (41, 42, 43) gegenüber der ersten Öffnung (35) positioniert sind, und zusätzlichen Positionen beweglich ist, in denen die mindestens eine zweite Öffnung (41, 42, 43) oder die mindestens eine dritte Öffnung (41, 42, 43) gegenüber der ersten Öffnung (35) positioniert ist.

2. Fangvorrichtung (1) nach Anspruch 1, **dadurch gekennzeichnet, dass** die Anzahl der zweiten und dritten Öffnungen (41, 42, 43) größer als zwei ist.

3. Fangvorrichtung (1) nach Anspruch 1 oder 2, **dadurch gekennzeichnet, dass** ein Aufsatz (3) zwischen der Schale (2) und der Haube (7) angeordnet ist und dass der Ring (4) drehbar um diesen Aufsatz (3) montiert ist.

4. Fangvorrichtung (1) nach einem der vorhergehenden Ansprüche, **dadurch gekennzeichnet, dass** die Öffnung (51) der Haube (7) von einer Platte (62) überragt wird, wobei diese Platte (62) in einem Abstand von der Öffnung (51) positioniert ist, um den Insekten einen Durchgang zu der Öffnung (51) zu ermöglichen.

5. Verwendung einer Vorrichtung (1) nach einem der Ansprüche 1 bis 5 zum Schutz einer Kulturpflanze, eines Gemüse- oder Ziergartens, eines landwirtschaftlichen Grundstücks oder eines Ortes, an dem Bienenstöcke aufgestellt sind, vor Insektenschädlingen.

## Claims

1. A device (1) for trapping insects, in particular flying insects, which consists of a trapping receptacle, which comprises a lower bowl (2) for receiving said insects, which is surmounted by an upper cap (7) forming on the one hand a trap and on the other hand a lid for the bowl (2), said lower bowl (2) and said upper cap (7) being shaped to be removably assembled, said cap (7) including an orifice (51) which extends downwards in the direction of said lower bowl (2) to form a funnel-shaped converging passageway (55), said bowl (2) including in a region of its peripheral wall (30) a first opening (35) having a first surface, this bowl (2) being provided with a movable member (4) having at least one second opening (41, 42, 43) and at least one third opening (41, 42, 43), or conversely, these second and third openings (41, 42, 43) having surfaces which are different and smaller than that of said first opening (35), **characterised by** the fact that the peripheral wall (20) of said bowl (2) is generally cylindrical and that said movable member (4) has the shape of a ring mounted movable in rotation around said peripheral wall (30), against the outer face of this wall, said member (4) being movable between a first position wherein neither said second nor said third opening (41, 42, 43) are positioned opposite said first opening (35), and additional positions wherein said at least one second opening (41, 42, 43) or said at least one third opening (41, 42, 43) is positioned opposite said first opening (35) .

2. The trapping device (1) according to claim 1, **characterised in that** the number of second and third openings (41, 42, 43) is greater than two.

3. The trapping device (1) according to claim 1 or 2, **characterised in that** a raiser (3) is interposed between said bowl (2) and said cap (7) and that said ring (4) is movably mounted in rotation around this raiser (3).

4. The trapping device (1) according to one of the preceding claims, **characterised by** the fact that the orifice (51) of said cap (7) is surmounted by a disc (62), this disc (62) being positioned remote from said orifice (51) so as to leave a passage for said insects towards said orifice (51).

5. A use of a device (1) according to one of claims 1 to 5 for the protection of a crop, a vegetable or ornamental garden, an agricultural plot, or a place where hives are implanted, against insect pests.
